# EUROPEAN PATENT APPLICATION

(11) **EP 4 502 233 A2**
(43) Date of publication of application: **05.02.2025**
(21) Application number: 24191863.0
(22) Date of filing: 30.07.2024
(51) Int. Cl.: C23F 13/04

(54) **MONITORING DEVICE FOR A CATHODIC PROTECTION SYSTEM AND CATHODIC PROTECTION SYSTEM**

(30) Priority: 04.08.2023 IN 202311052426
(71) Applicant: DEHN SE, 92318 Neumarkt i.d. OPf. (DE)
(72) Inventor: ALMADI, Vikas, 122050 Gurugram, Haryana (IN); SAINI, Sunil, 122050 Gurugram, Haryana (IN); SHARMA, Vinay Kumar, 122050 Gurugram, Haryana (IN); TYAGI, Himanshu, 122050 Gurugram, Haryana (IN)
(74) Representative: Prinz & Partner mbB

(57) **Abstract**

A monitoring device (20) for a cathodic protection system (10) of a metallic structure (12) comprises a sensor module (22) configured for measuring an electrical signal indicative of a DC signal and an AC signal of the cathodic protection system (10), a control module (56) and a communication module (60) operatively coupled to a central processing device (66) of the cathodic protection system (10). The control module (56) is configured to switch the monitoring device (20) between a sleep mode and an active mode. Further, the monitoring device (20), when being in the active mode, is configured to obtain the electrical signal, apply a first filter on the signal to obtain at least one filtered signal, convert the at least one filtered signal into at least one digital signal, apply a second filter to obtain at least one filtered digital signal and forward the at least one filtered digital signal to the central processing device (66).

Further, a cathodic protection system (10) is described.

## Description

The invention relates to a monitoring device for a cathodic protection system and a cathodic protection system with a plurality of the monitoring devices.

Metallic structures like pipelines are prone to corrosion processes if being exposed to environmental influences which bring the respective metallic structure in contact with reactive species like water and oxygen. This is especially the case if the metallic structure is buried in the ground, as is common practice for pipelines.

To suppress or at least delay the corrosion process, it is known to protect the metallic structure with a cathodic protection system that applies an external DC (direct current) voltage between the metallic structure and an anode of the cathodic protection system placed in the vicinity of the metallic structure. Thus, a cathodic protection system can be applied which counteracts the corrosion currents and thereby prevents or at least minimizes corrosion of the metallic structure. It is necessary to regularly check the DC voltage and the cathodic protection current applied by the cathodic protection system to assess the performance of the cathodic protection system.

Another influence on the corrosion process of metallic structures are impressed AC (alternating current) voltages which stem from electromagnetic fields close to the metallic structures, e.g. electromagnetic fields of high-voltage transmission lines in the vicinity of the metallic structure. Thus, there is also a need to determine any AC voltages and currents induced in the metallic structure for assessing the corrosion behavior.

Conventionally, a plurality of test points are provided along the metallic structure which are used to manually check the cathodic protection system by trained personnel with monitoring devices according to a given maintenance schedule. However, this procedure is time-consuming and produces high costs, especially in application scenarios in which the metallic structure is located in remote areas, which is typically the case for pipelines.

From US 2011/0238347 A1, a system for measuring values associated with cathodic protection of a structure is known. The system comprises a plurality of test units, wherein each test unit comprises a voltmeter for measuring a voltage between a reference cell and the structure. The test units are communicatively coupled to each other in a daisy-chain or mesh radio network configuration such that the measured voltages are sent to and from the test units until the voltages reach one of test units which is configured to upload any received signals to a web server or host computer. Though this system provides for an automated determination of voltages associated with cathodic protection, the used test units have a high power consumption due to the necessary data transfer within the daisy-chain or mesh network. Thus, personnel must still regularly travel to the location of the test units to exchange and/or re-charge internal energy storages of the test stations. Furthermore, the test stations need to conduct a plurality of measurements for obtaining the necessary measurement results, therefore further increasing the energy consumption of the monitoring devices based on the number of measurements.

It is an object of the invention to provide a cathodic protection system which has low demands in terms of maintenance and energy consumption while at the same time provides high-accuracy information on the state of the cathodic protection system. Further, it is an object of the invention to provide monitoring devices which can be used in such a cathodic protection system.

The object of the invention is solved by a monitoring device for a cathodic protection system of a metallic structure comprising a sensor module being connectable to the metallic structure and being configured for measuring an electrical signal indicative of a DC signal and an AC signal of the cathodic protection system and a control module operatively coupled to the sensor module, the control module being configured to process signals obtained from the sensor module and to switch the monitoring device between a sleep mode and an active mode. The monitoring device further comprises a communication module operatively coupled to the control module for forwarding signals received from the control module to a central processing device of the cathodic protection system. The monitoring device, when being in the active mode, is configured to obtain, by the sensor module, the electrical signal and apply a first filter on the electrical signal using a filtering circuit of the sensor module to obtain at least one filtered electrical signal. The monitoring device, when being in the active mode, is further configured to convert the at least one filtered electrical signal into at least one digital signal by an analog-to-digital-converter, transmit the at least one digital signal to the control module and apply a second filter on the at least one digital signal by applying a filter function in the control module for obtaining at least one filtered signal. Additionally, the monitoring device, when being in the active mode, is configured to forward, by the communication module, the at least one filtered digital signal to the central processing device.

The invention is based on the idea to measure an electrical signal indicative of a DC signal and an AC signal such that both the DC signal and the AC signal can be measured at the same time. Termed differently, the DC signal and the AC signal are analyzed simultaneously. Thus, the number of measurements is minimized which have to be conducted by the monitoring device to obtain the necessary information used for assessing the state of the cathodic protection system and the metallic structure. The reduction in the number of measurements also reduces the energy consumption of the monitoring device, resulting in an extended running time of the monitoring device without the need of manual intervention. Furthermore, the control device can switch the monitoring device between a sleep mode and an active mode such that energy consumption can be minimized at all times at which no measurement has to be conducted.

Furthermore, a two-step filtering process is used to increase the quality of the measurement results obtained by the monitoring device in the active mode, wherein the first filter is a hardware-based filter and the second filter is a software-based filter.

The software-based filter can be an FIR filter (finite impulse response filter). An FIR filter is especially effective in suppressing noise in the at least one digital signal such that the quality of the filtered digital signal is further improved.

Preferably, the metallic structure is a pipeline.

The term "DC signal" denotes a DC signal which comprises both a DC voltage and a DC current. The term "AC signal" denotes an AC signal which comprises both an AC voltage and an AC current.

The filtering circuit is especially configured to separate a DC signal and an AC signal when processing the electrical signal such that a filtered DC signal and a filtered AC signal are obtained. Thus, both information on DC and AC influences on the cathodic protection system and/or the metallic structure can be obtained from a single electrical signal, while providing the possibility to handle the filtered DC signal and the filtered AC signal independent from each other.

Preferably, the filtering circuit comprises a low-pass filter and a high-pass filter such that only defined frequency ranges have to be considered in the filtered electrical signal. This facilitates the further handling of the electrical signal and improves the accuracy of the obtained measurement results.

The low-pass filter especially is configured to filter for frequencies of 30 Hz or lower. Thus, the low-pass filter especially selects frequencies which can be associated with DC contributions in the electrical signal. Especially, these contributions are related to the cathodic protection voltage and cathodic protection current provided by the cathodic protection system.

The high-pass filter especially is configured to filter for frequencies higher than 30 Hz, e.g. for frequencies in the range of from 40 to 60 Hz. Thus, the high-pass filter especially selects frequencies which can be associated with AC contributions in the electrical signal, especially AC contributions with a frequency equal or close to a general main voltage, like 50 Hz. Thus, these AC contributions are especially related to the influence of main voltage lines located in the proximity of the metallic structure.

To ensure an especially reliable communication between the monitoring device and the central processing device of the cathodic protection system, the communication module can be a LoRa communication module. Thus, the monitoring device can be implemented in a LoRaWAN (Long Range Wide Area network). In this way, the monitoring device has no need to be accessible in a mobile communication network/cell network such that problems with mobile communication network availability, e.g. based on GSM, LTE and/or 5G technology, can be avoided, which is especially advantageous if the metallic structure is located in a remote area. Furthermore, LoRa communication modules have integrated energy-saving capabilities, thereby further extending the time in which the monitoring device can be operated without human intervention. Also, LoRa communication modules provide the possibility for peer-to-peer communication and can provide wireless communication over a distance of several kilometers, especially over a distance of 10 km or more.

For extending the measurement range of the monitoring device, the sensor module can comprise a first shunt resistor and a second shunt resistor, wherein the first shunt resistor has a different maximum operating current than the second shunt resistor.

The measuring range of the monitoring device is especially from 1 µA to 500 mA.

The monitoring device can comprise a memory module for storing the filtered digital signal. That is, the filtered digital signal obtained in the active mode of the monitoring device can also be stored within the monitoring device itself.

Especially, the monitoring device is configured to store the filtered digital signal in the memory unit if the transmission to the central processing device of the cathodic protection system fails. In this way, a loss of measurement data can be avoided. The monitoring device can be configured to forward the filtered digital signal stored in the memory unit the next time the active mode is entered by the monitoring device and a successful communication with the central processing device is again possible.

To further minimize the energy consumption of the monitoring device, in the sleep mode of the monitoring device, only the control module can be connected to an internal energy storage of the monitoring device. That is, only the control module needs to be powered in the sleep mode of the monitoring device such that the monitoring device can be switched from the sleep mode to the active mode by the control module. The further components of the monitoring device can thus be disconnected to avoid any energy consumption of these components in the sleep mode. This is especially preferable, as especially communication modules typically have one of the largest contributions to the energy consumption of monitoring devices. However, availability of the monitoring device is still given in a short time window during the active mode of the monitoring device. Overall, the time for which the monitoring device can be run without human intervention can thus be especially effectively increased.

The control module can be configured to switch the monitoring device from the sleep mode to the active mode after a pre-determined time interval. That is, the time window in which the monitoring device is actually active can be precisely controlled. Especially, the pre-determined interval is chosen such that the monitoring device measures an electrical signal once per day.

The object of the invention is further solved by a cathodic protection system for protecting a metallic structure, the cathodic protection system comprising a cathodic rectifier electrically connected to the metallic structure for applying a cathodic protection voltage between the metallic structure and a reference electrode, a plurality of monitoring devices as described before connected to the metallic structure, and one or more gateway devices, wherein each monitoring device of the plurality of monitoring devices is communicatively coupled to at least one of the gateway devices. The cathodic protection system further comprises a central processing device communicatively coupled to the gateway devices.

The properties and advantages of the monitoring device as described before apply for the cathodic protection system, too, and vice versa.

The cathodic protection system according to the invention can operate for extended periods of time without human intervention, while obtaining information on the state of the cathodic protection system and/or the metallic structure protected by the cathodic protection system in an automated manner based on the electrical signals obtained by each of the plurality of monitoring devices.

Preferably, each of the monitoring devices is directly coupled to the one or more gateway devices. Termed differently, preferably the plurality of monitoring devices and the one or more gateway device form a star network architecture or, in case more than one gateway device is present, a star-on-star network architecture. This considerably simplifies the overall network design of devices being part of the cathodic protection system. Further, there is no need for additional communication links between the monitoring devices which allows to minimize the time in which the communication module of the monitoring devices need to be active and the number of connections which have to be established by the communication module, resulting in a minimized energy consumption.

Especially, each of the monitoring devices is directly coupled to the one or more gateway devices by a local network protocol. Thus, there is no need for the monitoring devices to communicate via a mobile communication network with the one or more gateway devices such that an especially reliable communication link between the monitoring devices and the one or more gateway device can be established. Preferably, the local network protocol is LoRa-based.

The one or more gateway devices can be connected to the central processing device via a mobile communication network, e.g. based on GSM, LTE and/or 5G-technology. Thus, the one or more gateway devices can provide the link between the local network formed between the monitoring devices and the one or more gateway device and the central processing device.

Preferably, the plurality of monitoring devices are configured to switch between the sleep mode and the active mode at the same time. Thus, there is a defined time window in which a communication link between the monitoring devices and the one or more gateway devices needs to be active, while at all other times the communication link can be inactive for reducing the energy consumption of the monitoring devices and the one or more gateway devices.

To coordinate the time at which the monitoring devices switch between the sleep mode and the active mode, the central processing device can be configured to act as NTP server (i.e., as network-time-protocol server). During the active mode of the monitoring devices, the central processing device can forward an NTP information to the plurality of monitoring devices such that the control module of each of the monitoring devices can adjust an internal real-time clock (RTC) based on the NTP information. Thus, there is no need to use more complicated and/or energy-intensive measures for time coordination between the monitoring devices like a GPS-based time coordination.

Further, the one or more gateway devices can act only as relay station between the monitoring devices and the central processing device. Thus, the design of the one or more gateway devices can be simplified, resulting in overall lower costs of the cathodic protection system. Furthermore, the effort in configuration of the one or more gateway devices is minimized, thereby eliminating or at least reducing the need for personnel manually intervening at the location the one or more gateway devices for setting up the network operation of the one or more gateway device.

For providing redundant communication pathways, the cathodic protection system can comprise more than one gateway device and each of the monitoring devices can be connected to several of the gateway devices. Thus, the monitoring devices can be configured to forward any data to be sent to the central processing device via another gateway device if the default gateway device cannot be contacted. Termed differently, the monitoring device can be configured to automatically re-route the data transfer to the central processing device.

It is also possible that the monitoring device is connected to several gateway devices and always sends any data to be forwarded to the central processing device to all of the several gateway devices. Though this results in a higher effort for sending the data multiple times, there is no need for checking whether a given one of the gateway devices can actually be contacted.

The data forwarded by each of the monitoring devices can include further information in addition to the at least one filtered digital signal. E.g., the further information include an identifier, a status information, a signal strength indicator, a battery health indicator and/or a ping counter.

The central processing device can store the data received from the monitoring devices in a server memory unit. Preferably, the central processing device is configured to build a historical data set based on the data stored in the server memory unit and to analyze the historical data set to obtain at least one information on the state of the cathodic protection system and of the metallic structure.

Further advantages and properties of the invention will become apparent from the following description of a preferred embodiment, which is not be understood in a limiting sense, and from the Figures. In the Figures:
- Fig. 1 shows a schematic depiction of a cathodic protection system according to the invention with a plurality of monitoring devices according to the invention; and
- Fig. 2 shows selected parts of a circuit arrangement of the monitoring devices of Fig. 1.

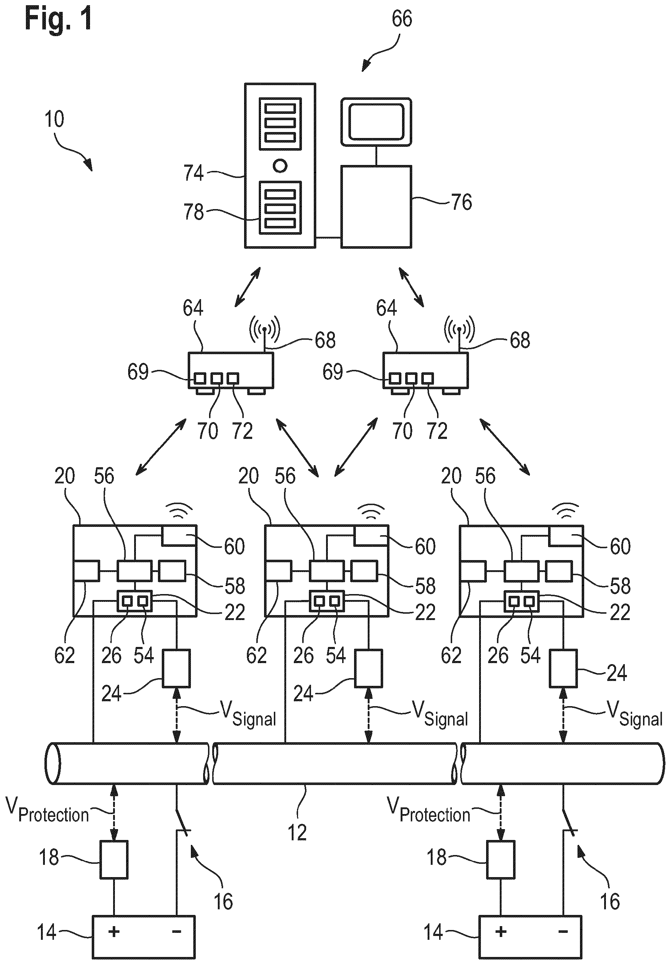

Fig. 1 shows a cathodic protection system 10 according to the invention for protecting a metallic structure 12 from corrosion effects.

In the shown embodiment, the metallic structure 12 is a metallic pipeline which is buried in the ground. Thus, the pipeline is exposed to water, oxygen and other environmental influences in the soil due to which the pipeline has a risk of being damaged over time due to corrosion effects. The pipeline is e.g. made of stainless steel. Of course, the metallic structure 12 can be made from different materials, too.

The cathodic protection system 10 is used for preventing or at least minimizing the effect of corrosion of the metallic structure 12 and for providing monitoring information which allow to evaluate the current state of the cathodic protection system 10 and the metallic structure 12.

The cathodic protection system 10 comprises two cathodic rectifiers 14, each of which is electrically connected to the metallic structure 12 by a rectifier switch 16 and to a reference electrode 18. Further, each of the cathodic rectifiers 14 is electrically connected to a (not shown) power source which powers the respective cathodic rectifier 14.

The cathodic rectifiers 14 are configured to apply a cathodic protection potential V_{protection} between the metallic structure 12 and the reference electrode 18, as indicated by a dashed double-arrow in Fig. 1. Associated to the cathodic protection potential V_{protection} is a cathodic protection current I_{protection}. The cathodic protection potential V_{protection} corresponds to a direct current (DC) voltage with negative sign which should be larger than any direct current corrosion potential which is to be expected for the metallic structure 12. Generally, the cathodic protection potential V_{protection} should be lower than -850 mV.

Of course, the number of cathodic rectifiers 14 can be different from the embodiment shown in Fig. 1. E.g., the cathodic protection system 10 can comprise only a single cathodic rectifier 14 or more than two cathodic rectifiers 14. Generally, the number of cathodic rectifiers 14 will dependent on the overall size of the metallic structure 12 and should be chosen such that a sufficient cathodic protection potential V_{protection} is ensured over the whole metallic structure 12.

The cathodic protection system 10 further comprises a plurality of monitoring devices 20 which are distributed along the length of the metallic structure 12 which are electrically connected to the metallic structure 12.

Each of the monitoring devices 20 has a sensor module 22 which is electrically connected to the metallic structure 12, and a measurement electrode 24 with which an electrical signal can be obtained by the sensor module 22, the electrical signal being indicative of a DC signal and an AC signal of the cathodic protection system 10.

The DC signal especially stems from the DC potential V_{protection} applied by the cathodic rectifier 14. However, the DC signal can be influenced by additional corrosion potentials and external DC potential which are coupled into the metallic structure 12, e.g. external DC potential induced by an industry plant in the vicinity of the metallic structure 12.

The AC signal especially stems from AC potentials of main connection lines in the vicinity of the metallic structure 12.

Both the DC signal and the AC signal provide indications for potential corrosion effects on the metallic structure 12 such that the information about the current state of the metallic structure 12 can be obtained by evaluating the DC signal and the AC signal.

The potential associated to the electrical signal is indicated by a dashed double arrow and denoted as V_{signal} in Fig. 1.

The sensor module 22 further comprises a filtering circuit 26 which is adapted to apply a first filter on the electrical signal obtained by the sensor module 22 to obtain at least one filtered electrical signal.

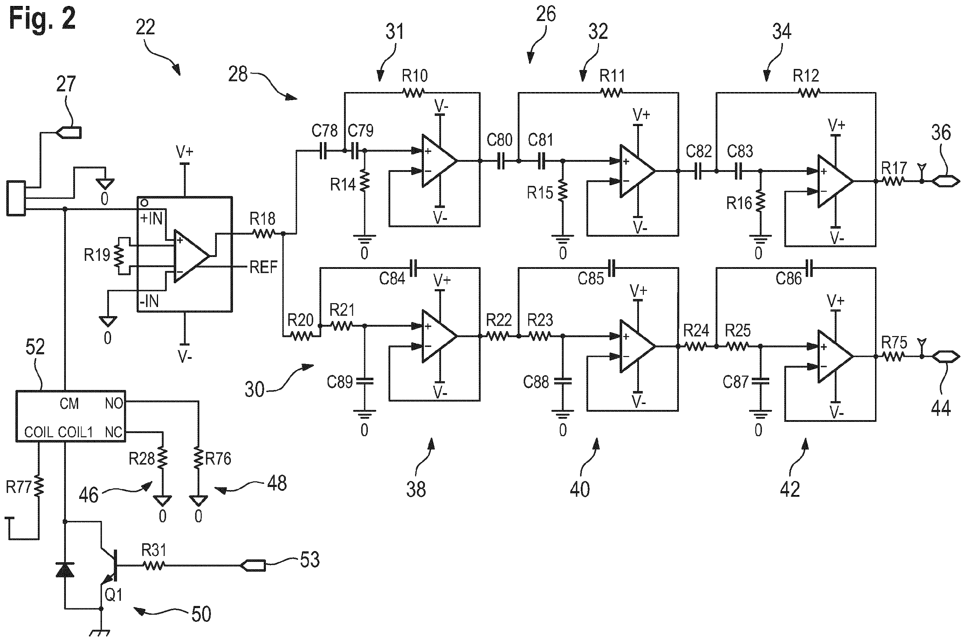

Fig. 2 shows selected parts of a circuit arrangement of the sensor module 22 including the filtering circuit 26.

The electrical signal obtained by the sensor module 22 is fed into the circuit arrangement at input 27. As explained before, the electrical signal can have both contributions from the DC signal as well as the AC signal. Preferably, both the DC signal and the AC signal contributions to the electrical signal are accessible via the sensor module 22.

For this purpose, in the shown embodiment, the filtering circuit 26 comprises a high-pass filter 28 and a low-pass filter 30.

The high-pass filter 28 consists of three high-pass filter elements 31, 32 and 34 connected in series, wherein the capacity of the capacitors associated with each of the high-pass filter elements 31, 32 and 34 decreases from the input side of the high-pass filter 28 to the output side of the high-pass filter 28 and the resistance of resistors associated with the respective high-pass filter element 31, 32 and 34 increases. That is, capacitor C79 has a larger capacity than capacitor C81 and capacitor C81 has a larger capacity than capacitor C83, while resistor R10 has a lower resistance than resistor R11 and resistor R11 has a lower resistance than resistor R12.

After having passed the high-pass filter 28, a filtered electrical signal is obtained at high-pass output 36, namely a filtered AC signal.

The high-pass filter 28 is especially configured such that the high-pass filter 28 filters for frequencies higher than 30 Hz, e.g. for frequencies in the range of from 40 to 60 Hz. In this way, contributions to the AC part of the electrical signal which are close to a general main voltage of typically 50 Hz can be pronounced in the filtered AC signal.

The low-pass filter 30 consists of three low-pass filter elements 38, 40 and 42 connected in series, wherein the resistance of the resistors associated with each of the low-pass filter elements 38, 40 and 42 generally increases from the input side of the low-pass filter 30 to the output side of the low-pass filter 30 and the capacitance of capacitors associated with the respective low-pass filter element 38, 40 and 42 increases. That is, the resistance of resistor R21 is lower than the resistance of resistor R25, while the capacity of capacitor C84 is lower than the capacity of capacitor C85 and capacitor C85 has a lower capacity than capacitor C86.

After having passed the low-pass filter 30, a filtered electrical signal is obtained at low-pass output 44, namely a filtered DC signal.

The low-pass filter 30 is especially configured such that the low-pass filter 30 filters for frequencies of 30 Hz or lower. In this way, contributions to the DC part of the electrical signal can be pronounced in the filtered DC signal.

As becomes evident from Fig. 2, both the filtered AC signal and the filtered DC signal can be obtained simultaneously from a single measurement of the electrical signal by the sensor module 22 and providing the electrical signal at input 27. Thus, the number of individual measurements which have to be executed by the monitoring device 20 can be reduced without losing information.

However, in principle it is also possible that only selected parts of the electrical signal are of interest and thus the filtering circuit 26 can be designed such that only a filtered DC signal or a filtered AC signal is obtained.

The filtered DC signal and the filtered AC signal both comprise a respective voltage and current information of the respective signal. That is, the sensor module 22 provides for a DC voltage, a DC current, an AC voltage and an AC current.

To increase the available measuring range of the monitoring device, the sensor module 22 further comprises a first shunt resistor 46 and a second shunt resistor 48 which are also denoted as resistors R28 and R76, respectively, in Fig. 2. The first shunt resistor 46 and the second shunt resistor 48 have different maximum operating currents.

Which of the first shunt resistor 46 and the second shunt resistor 48 is active can be determined based on a shunt switching circuit 50 which provides a shunt controller 52 with a shunt switching input signal from a shunt switching input 53 when the current associated to the electrical signal from input 27 exceeds the maximum operating current of the shunt with the lower maximum operating current.

E.g., if the first shunt resistor 46 is configured to handle currents in the range of from 1 µA up to a maximum operating current of 500 µA and the second shunt resistor 48 is configured to handle currents in the range of from 500 µA up to a maximum operating current of 500 mA, an overall operating range of from 1 µA to 500 mA can be realized by switching the active shunt resistor from the first shunt resistor 46 to the second shunt resistor 48 when the current associated with the electrical signal exceeds 500 µA.

Coming back to Fig. 1, each of the sensor modules 22 further comprises an analog-digital-converter 54 which converts the filtered electrical signal from the filtering circuit 26 into at least one digital signal. Specifically, the analog-digital-converter 54 converts the filtered AC signal into a digital AC signal and the filtered DC signal into a digital DC signal.

Each of the monitoring devices 20 further comprises a control module 56 operatively coupled to the sensor module 22. Thus, the sensor module 22 is configured to transmit the at least one filtered signal to the control module 56 such that the at least one filtered signal can be processed by the control module 56.

The control module 56 applies a second filter on the at least one digital signal by applying a filter function for obtaining at least one filtered digital signal. More precisely, if the control module 56 receives a digital AC signal and a digital DC signal from the sensor module 22, on each of the digital AC signal and the digital DC signal the second filter is applied such that a filtered digital AC signal and a filtered digital DC signal is obtained.

The second filter is especially a FIR filter for achieving an effective noise reduction.

The control module 56 is further operably connected to a memory module 58 such that the control module 56 can access data stored in the control module 56 and can store the at least one filtered signal in the memory module 58, if necessary.

Each of the monitoring devices 20 further comprises a communication module 60 operatively coupled with the control module 56 which allows the monitoring device 20 to communicate with further devices of the cathodic protection system 10.

The communication module 60 is a LoRa communication module such that the monitoring devices 20 can serve as devices within a LoRaWAN (Long Range Wide Area Network). In this way, the communication of the monitoring devices 20 is independent from the availability of a mobile communication network at the location of the respective monitoring device 20.

However, it is clear that in application scenarios in which a stable mobile communication network is given at the locations of the monitoring devices 20, the communication module 60 can also be configured to use communication connections based on mobile network technology like GSM, LTE and/or 5G.

Each of the monitoring devices 20 further comprises an internal energy storage 62 which provides the power necessary to run the components of the respective monitoring device 20.

The cathodic protection system 10 further comprises two gateway devices 64 and a central processing device 66.

The gateway devices 64 each comprise a gateway communication module 68 which is configured to establish bi-directional communication links with the monitoring devices 20 and the central processing device 66 as indicated by double-headed arrows in Fig. 1. Thus, the gateway devices 64 serve as relay-stations for communication between the monitoring devices 20 and the central processing device 66.

More precisely, the gateway communication module 68 is configured to both act as a LoRa communication module for bidirectional communication with the monitoring devices 20 and as a mobile network module for bidirectional communication with the central processing device 66. In this way, only the gateway devices 64 must be located at a location at which a stable mobile connection is available, while the monitoring devices 20 can be arbitrarily placed in the vicinity of the metallic structure 12, as long as a stable connection to at least one of the gateway devices 64 via LoRaWAN is possible.

The gateway devices 64 further comprise an internal gateway energy storage 69 for powering the gateway device 64, a gateway control module 70 for operating the components of the gateway device 64 and an optional gateway memory unit 72 in which signals obtained from the monitoring devices 20 can be temporarily stored if the communication between the respective gateway device 64 to the central processing device 66 is temporarily interrupted.

In the embodiment shown in Fig. 1, two gateway devices 64 are used. However, also a single gateway device 64 or more than two gateway devices 64 can be used in the cathodic protection system 10.

Each of the monitoring devices 20 is directly connected to one or more of the gateway devices 64. That is, there is no communication link between any of the monitoring devices 20 such that a star-on-star network architecture is realized with the gateway devices 64 acting as nodes of the stars.

Preferably, the gateway devices 64 act only as relay-stations between the monitoring device 20 and the central processing device 66 such to keep the design of the gateway device 64 as simple as possible and their energy consumption as low as possible.

The central processing device 66 comprises a server unit 74 and a user interface 76.

The server unit 74 comprises a server memory unit 78 for storing data received from the monitoring devices 20 such that the central processing device 66 can be used for building a historical data set which can be analyzed for obtaining information about the cathodic protection system and/or the metallic structure 12.

Further, the server unit 74 is configured to act as NTP server to provide NTP information to the monitoring devices 20.

A user can interact via the user interface 76 with the server unit 74, e.g. for adjusting a pre-determined time after which the monitoring devices 20 shall conduct a measurement and for assessing the data stored in the server memory unit 78.

In the following, the mode of action of the cathodic protection system 10 is described in more detail.

First, the cathodic protection system 10 is set up by providing the cathodic rectifiers 14 and the monitoring devices 20 and electrically connecting them to the metallic structure 12.

Then, the cathodic rectifiers start to apply the cathodic protection potential V_{protection} to the metallic structure 12.

Furthermore, the gateway devices 64 are provided such that each of the monitoring devices 20 can be directly coupled to at least one of the gateway devices 64 building the star-on-star network architecture LoRaWAN.

The gateway devices 64 in turn are connected to the central processing device 66 based on a mobile network connection, thereby establishing a link between the monitoring devices 20 and the central processing device 66.

A pre-determined time interval, e.g. 24 hours, is chosen by a user via the user interface 76 of the central processing device 66 and forwarded from the central processing device 66 over the gateway devices 64 to the monitoring devices 20.

The pre-determined time is used by the control module 56 of each of the monitoring devices 20 to determine a wake-up time at which the respective monitoring device 20 shall obtain an electrical signal indicative of the DC signal and the AC signal of the cathodic protection system 10.

Then, the control module 56 switches the respective monitoring device 20 in a sleep mode in which only the control module 56 is powered by the internal energy storage 62 such to minimize the energy consumption of the monitoring device 20. Thus, even the communication module 60 is not powered and the monitoring device 20 cannot be contacted.

When the wake-up time is reached, the control module 56 switches the monitoring device 20 back to the active mode in which the sensor module 22 obtains the electrical signal and processes the signal as already described before. That is, the first filter, i.e. the hardware-based filter, is applied on the electrical signal to obtain the at least one filtered electrical signal, the at least one filtered electrical signal is converted to the at least one digital signal by the analog-digital-converter 54 and transmitted to the control module 56. The control module 56 applies the second filter, i.e. the software-based filter, on the at least one digital signal to obtain the at least one filtered digital signal. The at least one filtered digital signal is then forwarded via the gateway device 64, to which the respective monitoring device is connected to, to the central processing device 66, in which the obtained data is stored in the server memory unit 78.

In addition to the at least one digital filtered signal, the monitoring device 20 can forward a further information to the central processing device 66, like an identifier, a status information, a signal strength indicator, a battery health indicator and/or a ping counter of the respective monitoring device 20.

Also, the gateway device 64 can add further information to the data forwarded to the central processing device 66 like a gateway identifier, a gateway status information, hardware information, software information, a gateway signal strength indicator, and a number of monitoring devices 20 connected to the gateway device 64.

After forwarding the at least one filtered digital signal to the central processing device 66, the monitoring devices 20 stay in the active mode for a pre-determined waiting period. The waiting period preferably has a duration of 5 minutes or less.

In the waiting period, the monitoring device 20 can receive further instructions and/or information from the central processing device 66, especially an updated pre-determined time based on the NTP server functionality of the central processing device 66. Thus, it can be ensured that the monitoring devices 20 remain time-coordinated, as the same next wake-up time can be calculated based on the updated pre-determined time, or, if no updated pre-determined time is sent by the central processing device 66, based on the pre-determined time already available to the control module 56.

Then, the control module 56 switches the monitoring unit back to the sleep mode in which again only the control module 56 is powered by the internal energy storage.

When the next wake-up time is reached, the next measurement and data transmission cycle begins.

Thus, the monitoring devices 20 of the cathodic protection system 10 can be operated with a minimized energy consumption while regularly providing information about the state of the cathodic protection system 10 and/or the supervised metallic structure 12. Thus, corrosion processes of the metallic structure 12 and changes in the atmosphere within and around the metallic structure 12 can be estimated for extended periods of time without the need that personnel manually checks the state of the cathodic protection system 10, especially of the monitoring devices 20 and the gateway devices 64.

Thus, it can be reliably assessed that the cathodic protection system 10 works as intended and the metallic structure 12 does not experience fatal corrosion effects, such that downtimes and maintenance periods can be minimized and possible breakages of the metallic structure 12 can be predicted and thereby avoided.

## Claims

1. A monitoring device (20) for a cathodic protection system (10) of a metallic structure (12) comprising
a sensor module (22) being connectable to the metallic structure (12) and being configured for measuring an electrical signal indicative of a DC signal and an AC signal of the cathodic protection system (10),
a control module (56) operatively coupled to the sensor module (22), the control module (56) being configured to process signals obtained from the sensor module (22) and to switch the monitoring device (20) between a sleep mode and an active mode, and
a communication module (60) operatively coupled to the control module (56) for forwarding signals received from the control module (56) to a central processing device (66) of the cathodic protection system (10),
wherein the monitoring device (20), when being in the active mode, is configured to
- obtain, by the sensor module (22), the electrical signal,
- apply a first filter on the electrical signal using a filtering circuit (26) of the sensor module (22) to obtain at least one filtered electrical signal,
- convert the at least one filtered electrical signal into at least one digital signal by an analog-digital-converter (54) and transmit the at least one digital signal to the control module (56),
- apply a second filter on the at least one digital signal by applying a filter function in the control module (56) for obtaining at least one filtered digital signal, and
- forwarding, by the communication module (60), the at least one filtered digital signal to the central processing device (66).

2. The monitoring device (20) according to claim 1, wherein the filtering circuit (26) is configured to separate a DC signal and an AC signal when processing the electrical signal such that a filtered DC signal and a filtered AC signal are obtained.

3. The monitoring device (20) according to claim 1 or 2, wherein the filtering circuit (26) comprises a low-pass filter (28) and a high-pass filter (30).

4. The monitoring device (20) according to any of the preceding claims, wherein the communication module (60) is a LoRa communication module.

5. The monitoring device (20) according to any of the preceding claims, wherein the sensor module (22) comprises a first shunt resistor (46) and a second shunt resistor (48), wherein the first shunt resistor (46) has a different maximum operating current than the second shunt resistor (48).

6. The monitoring device (20) according to any of the preceding claims, wherein the monitoring device (20) comprises a memory module (58) for storing the at least one filtered digital signal.

7. The monitoring device (20) according to any of the preceding claims, wherein, in the sleep mode of the monitoring device (20), only the control module (56) is connected to an internal energy storage (62) of the monitoring device (20).

8. The monitoring device (20) according to any of the preceding claims, wherein the control module (56) is configured to switch the monitoring device (20) form the sleep mode to the active mode after a pre-determined time interval.

9. A cathodic protection system (10) for protecting a metallic structure (12), the cathodic protection system (10) comprising
a cathodic rectifier (14) electrically connected to the metallic structure (12) for applying a cathodic protection voltage between the metallic structure (12) and a reference electrode (18),
a plurality of monitoring devices (20) according to any of the preceding claims electrically connected to the metallic structure (12),
one or more gateway devices (64), wherein each monitoring device (20) of the plurality of monitoring devices (20) is communicatively coupled to at least one of the gateway devices (64), and
a central processing device (66) communicatively coupled to the gateway devices (64).

10. The cathodic protection system (10) of claim 9, wherein each of the monitoring devices (20) is directly coupled to the one or more gateway devices (64), especially by a local network protocol.

11. The cathodic protection system (10) of claim 9 or 10, wherein the one or more gateway devices (64) are connected to the central processing device (66) via a mobile communication network.
